# EUROPEAN PATENT APPLICATION

(11) **EP 1 498 440 A2**
(43) Date of publication of application: **19.01.2005**
(21) Application number: 04103241.8
(22) Date of filing: 08.07.2004
(51) Int. Cl.: C08G 18/08, C08G 18/70, C08K 5/19, C09J 9/02

(54) **Antistatic adhesive for plastic film**

(30) Priority: 15.07.2003 JP 2003196911; 24.02.2004 JP 2004047472
(71) Applicant: Hayashi, Kanji, Tokyo (JP)
(72) Inventor: Hayashi, Kanji, Tokyo (JP)
(74) Representative: King, James Bertram

(57) **Abstract**

An adhesive with excellent adhesiveness, antistatic property, compatibility with the environment, adhesion strength and heat resistance for dry laminates and also complex plastic films using an adhesive is prepared by adding an antistatic agent into a water-dispersible polyurethane resin having a carboxyl group in the side chain. A water dispersible polyisocyanate is used as a bridging/curing agent for the water dispersible polyurethane resin, and a mixture of quaternary ammonium salt betaine and an electrolytic metallic salt is used as the antistatic agent. For an adhesive having high adhesion strength and heat resistance, an aliphatic isocyanate-based curing agent is used as a bridging/curing agent for the solvent-based polyurethane resin, and a mixture of aliphatic dimethylethyl ammonium ethosulphate salt and polyoxyethylene alkyl ether is used as the antistatic agent. By dry-laminating the plastic film with this adhesive, a product having excellent adhesion strength and heat resistance can be obtained.

## Description

### FIELD OF THE INVENTION

This invention relates to an antistatic adhesive for water-based or solvent-based dry laminates providing an excellent antistatic property on a film surface, laminate strength, heat seal strength, compatibility with the environment in the laminate processing technique and to a complex plastic film laminated with the adhesive.

### BACKGROUND OF THE INVENTION

Most conventional adhesives for dry laminate are prepared with an ethyl acetate solution. The environmental pollution problems caused by organic solutions and solvents require strict surveillance and control in many countries. In some countries the use of organic solvent based adhesives for dry laminate is partially prohibited.

Therefore there is a need for an adhesive for water-based laminate which does not use organic solvent, but there has been no effective proposal for that purpose so far.

For a laminate film using an adhesive for dry laminate based on the conventional technology, generally an antistatic agent is mixed and incorporated into the laminate base film for the purpose of preventing electrification of the film surface. In film with an antistatic agent kneaded therein, sometimes the antistatic agent disadvantageously bleeds. To overcome this problem, the following method is generally known as a method for imparting an antistatic property to a film without a kneading process for incorporating the antistatic agent therein. Japanese Patent Publication No.2002-059518

This patent document provides a resin film for decorative sheet lamination with little dust adhered thereon and having an excellent antistatic property as well as a decorative sheet laminated with the resin film therein. The resin film according to this invention is prepared by using a copolymer polyester film as an adhesive resin layer 4 and a polybutylene terephthalate film as a base resin layer 6 to selectively form a print layer 5, and further laminating a transparent surface resin layer 7, if required, from the bottom successively, and is characterised in that 1 to 10% of an antistatic agent is contained by in an adhesive 3 for joining those resin layers together and an adhesive for adhering a decorative film to the base.

In this film, the problem of bleeding does not occur, but there is still the problem that adhesion strength of the adhesive prepared as described above is lower because an antistatic agent is mixed therein.

### OBJECTS OF THE INVENTION

The object of the present invention is to provide an antistatic adhesive for water-based or solvent-based dry laminate with an excellent antistatic capacity, compatibility with environment, adhesion strength, and heat resistance as well as a complex plastic film laminated with the adhesive.

The present invention provides an antistatic adhesive for water-based dry laminate, and the adhesive is prepared by adding an antistatic agent in a water-dispersible polyurethane resin having a carboxyl group in a side chain thereof.

The present invention also provides an antistatic adhesive for water-dispersible dry laminate, and the water-dispersible polyisocyanate is used as a bridging/curing agent for the water-dispersible polyurethane resin according to claim 1.

Advantageously the antistatic agent is a mixture of quaternary ammonium salt betaine and an electrolytic metallic salt.

Betaine is a hybrid ion or amphoteric ion which is a zwitterionic surfactant also called a Betaine structure.

This invention further provides an antistatic adhesive for water-based dry laminate comprising the said polyurethane resin water dispersion and the said polyisocyanate water dispersion.

The quaternary ammonium salt betaine is preferably alkyl dimethyl aminoacetate.

The antistatic adhesive for water-based dry laminate, and the electrolytic metallic salt may be a mixture thereof with one or more selected from the group consisting of sodium chloride, magnesium chloride, potassium chloride, sodium nitrate, magnesium nitride, potassium nitrate, and the like compatible compounds.

This invention also provides a complex plastic film laminated with the antistatic adhesive for water-based dry laminate according to the previously described features.

Composition of the antistatic adhesive for water-based dry laminate and examples of the use will be explained in detail below. First, it is assumed in the following description that a component solution A is prepared by adding the antistatic agent solution wherein the antistatic agent is a mixture of quaternary ammonium salt betaine and an electrolytic metallic salt to the water dispersions of the polyurethane resin having a carboxyl group in a side chain thereof. Also it is assumed that a component solution B is a polyisocyanate water dispersion being water-dispersible polyisocyanate used as a bridging/curing agent for the water-dispersible polyurethane resin which is added to the component solution A. The solutions A and B are mixed at a specific ratio to prepare a coating liquid. This coating liquid is applied on a plastic film as a base material. After the surface of the plastic film with the coating liquid applied thereon is dried, it is pressed on a sealant base material for lamination. Then, the lamination is kept in an ageing bath for 24 hours at 40 degree Celsius for curing to form a laminate film.

A base material of this laminate film is any of PET, OPP, Nyl, silica evaporation PET, and the like, while a base material of sealant base material is any of CPP, PE, and the like. In any combination of any laminate base material and any sealant base material described above , excellent laminate strength and seal strength are provided. In addition, the water resistance and heat resistance thereof are comparable to those provided by antistatic adhesives based on an organic solvent.

Regarding the antistatic performance which is a feature of this adhesive, the friction-charged electrostatic potential on both surfaces of this laminate film is very small, and it is in the range from 0.1 kV. to 0.3 kV.

The solid content ratio of the carboxyl group in a side chain of the polyurethane resin in the range from 1 to 6% is effective for dispersion of this polyurethane resin in water, and more preferably the content should be in the range 1.5 to 5.0%.

The mixing ratio of the alkyl dimethyl aminoacetate betaine and the electrolytic metallic salt of the antistatic agent should be in the range from 12:1 to 6:1 by the solid content weight ratio, and more preferably the ratio should be in the range from 10:1 to 7:1.

It is effective to add, preferably, poly vinyl pyrrolidone (PVP) to the component A of this adhesive described above as a stabiliser for liquid. The average molecular weight of the PVP is between 600,000 and 1,200,000. The quantity of the PVP to the component A should be in the range from 3 to 10% by the solid content weight ratio, and more preferably the content ratio should be in the range 4 to 8%.

This invention is further described and explained with reference to the following Examples, which are not intended to limit the scope of this invention.

### Example 1

An embodiment of the present invention using the samples and additives according to the features of claims 1 to 6 will be described in detail below. Samples used in the embodiment 1
1. Polyurethane resin water dispersion (solid content: 35%)
2. Alkyl dimethyl aminoacetate betaine water solution (solid content: 34%)
3. Potassium nitrate
4. Water-dispersible polyisocyanate (solid content: 100%)
5. Poly vinyl pyrrolidone aqueous solution (solid content: 20%)

The water-based adhesive according to the present invention was prepared with the samples 1 to 5 above.

### a. Preparation of the antistatic agent:

The sample 2 of alkyl dimethyl aminoacetate betaine water solution was mixed in the sample 3 of potassium nitrate at the ratio of 194:6 (solid content: 36.26%, aqueous solution)

### b. Preparation of the component A of this water-based adhesive.

### composition:

A preparation of the antistatic agent solution described in the section a above was added to the sample 1 of polyurethane resin water dispersion. The mixing ratio was 100:24 by weight

Next, the sample 5 of poly vinyl pyrrolidone water solution was added to the polyurethane resin water dispersion with the antistatic agent having been added therein. The mixing ratio was adjusted to 51:10 by weight to form the component A.

### c. Preparation of the component B.

The sample 4 of water-dispersible polyisocyanate was diluted twice with water to prepare a solution with the solid content of 50%.

### Example 2

To prepare this adhesive agent, the solution with the solid content of 20% prepared with the component A water dispersions was used.

The mixing preparation of this adhesive agent:

| | | |
|---|---|---|
| 1. | Component solution A | 10 kg |
| 2. | Component solution B | 0.8 kg |
| | Total | 10.8 kg |

(The solid content % of this mixed solution was approximately 22%)

### Example 3

This example corresponds to the invention as described in claim 7 in which various films are adhered to each other with the adhesive agent according to the present invention and by using a dry laminator.

As a coating base material for the adhesive agent, materials enlisted in Table 1 were selected, and this adhesive agent was applied to each surface processed by corona discharging or with silica deposited thereon. As a coating plate, a carved gravure plate (100 lines) was used for coating. After drying the amount of the coating agent applied thereon was in the range from 3.2 to 3.5/m².

**[Table 1]**

| **Kind of film** | **Thickness** | **Maker** | **Brand** |
|---|---|---|---|
| OPP | 20µ | Futamura Chemical Industries Co., Ltd. | FOR |
| PET | 12µ | Toyobo Co. Ltd | E-5100 |
| O-Nylon | 15µ | UNITIKA Co. Ltd. | Emblem |
| Silica Evaporation PET | 12µ | Oike Industrial Co., Ltd. | MOS-TO |

As a sealant film, the materials in the table 2 were selected. The surface of each of those materials was pressed and adhered to the surface with the adhesive agent applied thereon. Then the lamination formed with adhesion was aged in a thermostatic chamber at 40 °C for 24 hours.

**[Table 2]**

| **Kind of film** | **Thickness** | **Maker** | **Brand** |
|---|---|---|---|
| LLDPE | 40µ | Toyobo Co. Ltd | L4102 |
| CPP | 30µ | Futamura Chemical Industries Co., Ltd. | FHK2 |

### Experiment 1

The laminate strength, heat seal strength and friction-charged electrostatic potential the laminate film of the embodiment 3 were measured. Laminate strength measurement:

From an edge of the sample cut into a piece with the width of 15 mm, the base material and sealant film were peeled off in the T-shaped state, and the strength at the peeling speed of 300 mm/min was measured with an autograph.

### Measurement of the heat seal strength:

Two samples of sealant film for the laminated film were placed face to face and were heat-sealed at the conditions of 150 °C and 1 kgf/cm²/sec. The heat-sealed section of the sample was cut into a piece with the width of 15 mm, and the sample piece was set at an autograph in the T-shaped state to measure the strength at the peeling speed of 300 mm/min. The result of this measurement is shown in Table 3.

**[Table 3]**

| **Configuration of laminated films** | **Laminate strength [gf/15mm]** | **Heat seal strength [kgf/15mm]** |
|---|---|---|
| OPP20/LLDPE40 | 320 | 3.6 |
| PET12/LLDPE40 | 350 | 3.8 |
| ONy15/LLDPE40 | 410 | 4.3 |
| Silica evaporation PET/ LLDPE40 | 220 | 2.5 |
| OPP20/CPP30 | 340 | 3.7 |
| PET12/CPP30 | 380 | 3.8 |
| ONy15/CPP30 | 420 | 4.5 |
| Silica evaporation PET/ CPP30 | 230 | 2.9 |

The friction-charged electrostatic potential (kV) of the laminated film after curing (measuring condition: 23 °C, 40% RH) is as shown in Table 4.

**[Table 4]**

| **Configuration of laminated films** | **Base material surface [gf/15mm]** | **Sealant surface [kgf/15mm]** |
|---|---|---|
| OPP20/LLDPE40 | 0.0~0.1 | 0.1~0.2 |
| PET12/LLDPE40 | 0.0~0.1 | 0.0~0.2 |
| ONy15/LLDPE40 | 0.2~0.3 | 0.2~0.3 |
| Silica evaporation PET/ LLDPE40 | 0.0~0.2 | 0.1~0.2 |
| OPP20/CPP30 | 0.0~0.1 | 0.0~0.2 |
| PET12/CPP30 | 0.0~0.1 | 0.0~0.2 |
| ONy15/CPP30 | 0.2~0.3 | 0.1~0.3 |
| Silica evaporation PET/ CPP30 | 0.1~0.2 | 0.0~0.1 |

### [Experiment 2]

The laminated film in Example 3 was adhered to a surface of LLDPE film not subjected to corona discharging treatment, and after ageing for 24 hours at 40 °C in a thermostatic chamber, the LLDPE film was peeled off, and the surface resistance value of the applied adhesive agent itself was measured. The result is as shown in the table 5.

**[Table 5]**

| Conditions for measurement: 23°C, 40% RH | |
|---|---|
| **Configuration of laminated film** | **Surface Resistance value of *marked surface** |
| OPP20/adhesive(*)/(peeling)LLDPE | 2.0xE10 |
| PET12/adhesive(*)/(peeling)LLDPE | 1.5xE10 |
| ONy15/adhesive(*)/(peeling)LLDPE | 6.0xE9 |

### Advantages of the Invention

As apparent from the foregoing results, the adhesive according to the present invention in claims 1 to 6 and the complex plastic film in claim 7 are extremely effective for practical use with the excellent adhesiveness, antistatic property and compatibility with environment on account of water-based as well as with the excellent properties in heat seal strength and heat/water resistance.

According to the invention described in claim 8 to 12, researches and studies are made for expressing a function to resist generation of static on a surface of laminated film by giving antistatic properties to the solvent-based adhesive, and in result of those concentrated researches and studies, the adhesive for laminate and the complex plastic film having antistatic properties of the objective of the present invention without degrading the adhesive properties of the adhesive was obtained. The composition of the present invention accomplished is as described below.

The antistatic adhesive for solvent-based dry laminate according to claim 8 was prepared by adding antistatic agent to solvent-based polyurethane resin.

In the invention according to claim 9, an aliphatic isocyanate-based curing agent is used as a bridging/curing agent for the solvent-based polyurethane resin according to claim 8.

In addition, the invention according to claim 10, the antistatic agent according to claim 8 is a mixture of an aliphatic dimethylethyl ammonium ethosulphate salt and a polyoxyethylene alkyl ether.

In the invention according to claim 11, the adhesive according to claim 8 comprises an organic solvent solution of polyurethane resin and the organic solvent solution of aliphatic isocyanate-based curing agent according to claim 9.

In the invention according to Claim 12, the complex plastic film is laminated with the antistatic adhesive for solvent-based dry laminate according to any of claims 8 to 11.

Composition and the examples of use of the aforementioned antistatic adhesive for solvent-based dry laminate according to the present invention will be described in details.

The component A is prepared by previously adding ethyl acetate solution of the antistatic agent in claim 10 to ethyl acetate solution of the polyurethane resin described in claim 8. The component B is an ethyl acetate solution of isocyanate-based curing agent in claim 9 which is added in the component A. The coating liquid is prepared by mixing the components A and B at a predetermined ratio. The solution is applied on the plastic film base material, and after the coated surface is dried, the surface is pressed onto the sealant base material for lamination.

Then, the lamination is stored in an ageing bath for 24 hours at 40°C for curing to prepare a laminate film.

A base material for the laminate film base is any of PET, OPP, Nyl, silica -deposited PET or the like, while a base material for the sealant base material is any of CPP, PE or the like. Any combination of the aforementioned laminate film base material and the sealant base material provides the excellent laminate strength and sealing strength. Also the water resistance and heat resistance are excellent.

The antistatic property of the adhesive which is a feature of the present invention shows is extremely high, and for instance the friction-charged electrostatic potential is in the range from 0.0 to 0.2 kV on both sides of the laminate film.

The polyurethane resin according to the invention described in claim 8 is polyester-based polyurethane resin, which is a mixture of high Tg polyurethane resin and low Tg polyurethane resin. The mixing ratio of high Tg polyurethane resin to low Tg polyurethane resin is in the range from 1 : 2 to 1 : 5.

In this mixing step, a temperature of the high Tg polyurethane resin is set to the range of 0 to 40°C, and a temperature of the low Tg polyurethane resin is set to the range from -30 to 0 °C.

The mixing ratio of the aliphatic dimethylethyl ammonium ethosulphate to the polyoxyethylene alkyl ether according to claim 10 is in the range from 10: 1 to 12 : 1 by the solid content weight ratio.

### Example 4

An example in which the samples according to claims 8 to 10 were used is described in details below.

Samples used in Example 4:
1. High Tg polyester-based polyurethane resin ethyl acetate solution (solid content: 30 %)
2. Low Tg polyester-based polyurethane resin ethyl acetate solution (solid content: 30 %)
3. Aliphatic isocyanate-based curing agent ethyl acetate solution (solid content: 50 %)
4. Aliphatic dimethylethyl ammonium ethosulphate (solid content: 100%)
5. Polyoxyethylene alkyl ether (solid content: 100 %)
6. Solvent: ethyl acetate

The solvent-based adhesive was prepared by using any of the samples 1 to 6 above.
a. The sample 5 was mixed in the sample 4 at the mixing ratio of 10:1, and then the ethyl acetate solvent (sample 6) was mixed to prepare a 30% ethyl acetate solution.
b. The high Tg polyurethane resin (sample 1 above) dissolved in the 30% ethyl acetate solution and the low Tg polyurethane resin (Sample 2) dissolved in the 30% ethyl acetate solution are mixed at the mixing ratio of
   1:2.5 by the weight ratio to prepare a mixture solution.
c. The ethyl acetate solution with the antistatic agent mixed by 30% therein was added to the polyurethane resin dissolved in the 30% ethyl acetate solution at the mixing ratio of 10:1.

### Example 5

The component solution A prepared by mixing the antistatic agent ethyl acetate solution at the mixing ration described above and the component solution B as a curing agent were blended with each other at the mixing ratio as shown below.

| | | |
|---|---|---|
| 1. | Component solution A | 10 Kg |
| 2. | Component solution B | 1 Kg |
| | Total | 11 Kg |

(solid content of the mixed solution was about 31%).

### Example 6

An example in which the complex plastic film according to claim 12 was prepared by laminating various types of films to each other with a dry laminator and by using the adhesive according to the present invention is described below. An adhesive coating base material is chosen from the materials shown in Table 6, and then the adhesive is applied on each surface processed by means of corona discharging treatment or with silica deposited thereon. An engraving gravure plate (100 lines) is used as a coating plate for application . The mount of adhesive after drying was in the range from 3.2 to 3.5/m².

**[Table 6]**

| **Kind of Film** | **Thickness** | **Maker** | **Brand** |
|---|---|---|---|
| OPP | 20µ | Futamura Chemical Industries Co., Ltd. | FOR |
| PET | 12µ | Toyobo Co. Ltd | E-5100 |
| O-Nylon | 15µ | UNITIKA Co. Ltd. | Emblem |
| Silica Vapour Deposition PET | 12µ | Oike Industrial Co., Ltd. | MOS-TOX |

The sealant film is chosen from those shown in Table 7, and each surface processed by means of the corona discharging treatment is pressed and adhered a surface with the adhesive applied thereon, and then the laminate film was stored for ageing in a thermostatic chamber for 24 hours at 40°C.

**[Table 7]**

| **Kind of Film** | **Thickness** | **Maker** | **Brand** |
|---|---|---|---|
| LLDPE | 40µ | Toyobo Co. Ltd | LIX L-4102 |
| CPP | 60µ | Toyobo Co. Ltd | PYLEN CT P-1146 |

### Example 7

With the adhesive prepared in Example 5, the film as shown in Table 6 as a base material and the film shown in Table 7 as a sealant were adhered to each other at the conditions as described in Example 6, and the lamination was stored for four days in an ageing chamber at 40°C for curing the adhesive to obtain the following complex plastic film (laminate film).
1. (front side) OPP20µ/adhesive/LLDPE40µ (back side)
2. (front side) PET12µ/adhesive/LLDPE40µ (back side)
3. (front side) O-NYLON 15µ/adhesive/LLDPE40µ (back side)
4. (front side) Silica Vapour Deposition PET12µ/adhesive/LLDPE40µ (back side)
5. (front side) PET12µ/adhesive/CPP60µ (back side)
6. (front side) O-NYLON15µ/adhesive/CPP60µ (back side)

The laminate strength, heat-seal strength and friction-charged electrostatic potential of the laminate film was measured. The result is as shown in Table 8.

For measurement of the heat-seal strength, a base material and a sealant film were peeled from the sample piece having the width of 15 mm in the T-shaped state, and then the strength was measured when peeling at the peeling speed of 300 mm/min was measured with an autograph.

**[Table 8]**

| **Complex Film** | | **Laminating Strength** | **Remarks** |
|---|---|---|---|
| 1 | OPP20/LLDPE40 | 328 | Film rupture |
| 2 | PET12/LLDPE40 | 148 | |
| 3 | ONY15/LLDPE40 | 780 | |
| 4 | Silica Vapour Deposition PET12/LLDPE40 | 227 | |
| 5 | PET12/CPP60 | 180 | |
| 6 | ONY15/CPP60 | 801 | |

### Measurement of the heat-seal strength

Surfaces of the sealant films in the sample laminate film were placed face to face, and heat sealing was performed (at the conditions of 150 °C, 1 Kgf/cm², 1 sec.). The heat-sealed section was cut into a piece with the width of 15 mm, and the sample piece was set in an autograph in the T-shaped state, and the heat-seal strength when peeled at the peeling speed of 300 mm/min was measured. The result is as shown in Table 9.

**[Table 9]**

| (Kgf/15mm) | | | |
|---|---|---|---|
| **Complex Film** | | **Heat seal Strength** | **Remarks** |
| 1 | OPP20/LLDPE40 | 4.04 | Film rupture |
| 2 | PET12/LLDPE40 | 4.89 | |
| 3 | ONY15/LLDPE40 | 5.20 | |
| 4 | Silica Vapour Deposition PET12/LLDPE40 | 4.32 | |
| 5 | PET12/CPP60 | 5.01 | |
| 6 | ONY15/CPP60 | 6.38 | |

The friction-charged electrostatic potential of the laminated films after ageing is shown in Table 10.

**[Table 10]**

| (o = excellent; Δ = fair; x = poor) measurement conditions (23°C, 40% RH) | | | | | |
|---|---|---|---|---|---|
| **Constitution of Laminated film** | | **Friction-charged electrostatic potential (kV)** | | | |
| | | **Front side of Material** | **Judgement** | **Back side of Sealant** | **Judgement** |
| 1 | OPP20/LLDPE40 | 0.0~0.1 | o | 0.0~0.1 | o |
| 2 | PET12/LLDPE40 | 0.0~0.1 | o | 0.0~0.1 | o |
| 3 | ONY15/LLDPE40 | 0.1~0.3 | o | 0.1~0.4 | o |
| 4 | Silica Vapour Deposition PET12/LLDPE40 | 0.3~0.5 | o | 0.3~0.6 | o |
| 5 | PET12/CPP60 | 0.0~0.1 | o | 0.0~0.1 | o |
| 6 | ONY15/CPP60 | 0.1~0.4 | o | 0.2~0.4 | o |

The surface-specific resistance value of each of the laminate films after ageing is shown in Table 11.

**[Table 11]**

| measurement conditions (23°C, 40% RH) | | | |
|---|---|---|---|
| | | **Surface Peculiar Resistance (Ω)** | |
| **Constitution of Laminated film** | | **Front side of Material** | **Back side of Sealant** |
| 1 | OPP20/LLDPE40 | more than 1.0 x 10¹² | more than 1.0 x 10¹² |
| 2 | PET12/LLDPE40 | more than 1.0 x 10¹² | more than 1.0 x 10¹² |
| 3 | ONY15/LLDPE40 | more than 1.0 x 10¹² | more than 1.0 x 10¹² |
| 4 | Silica Vapour Deposition PET12/LLDPE40 | more than 1.0 x 10¹² | more than 1.0 x 10¹² |
| 5 | PET12/CPP60 | more than 1.0 x 10¹² | more than 1.0 x 10¹² |
| 6 | ONY15/CPP60 | more than 1.0 x 10¹² | more than 1.0 x 10¹² |

### Example 8

A bag (8 cm x 10 cm) was prepared with the laminated film of Example 7 and water (80 g) was sealed in the bag to use it as a sample. In the boiling experiment, the sample was heated in boiling water at 90°C for one hour and dried after cooling with water, and then changes in the sample were observed. The result is shown in Table 12.

**[Table 12]**

| **Constitution of Laminated film** | | **Whitening of Film** | **Exfoliation of Film** | **Evaluation** |
|---|---|---|---|---|
| 1 | OPP20/LLDPE40 | No Change | None | o |
| 2 | PET12/LLDPE40 | No Change | None | o |
| 3 | ONY15/LLDPE40 | No Change | None | o |
| 4 | Silica Vapour Deposition PET12/LLDPE40 | No Change | None | o |
| 5 | PET12/CPP60 | No Change | None | o |
| 6 | ONY15/CPP60 | No Change | None | o |

### Advantages of the invention

In the inventions according to claims 8 to 12, a mixture solution as an antistatic agent is added in a mixture solution of the high Tg polyurethane resin and low Tg polyurethane resin each based on polyester to prepare an adhesive for lamination of plastic films, the adhesive has the antistatic property without losing the adhesion strength. The complex plastic film with the adhesive mixed therein has the high laminate strength and resistance against hot water, which is every effecting in the fields of packaging, printing, or the like. The adhesive according to the present invention is compatible with any solvent including water-based and organic material solvents.

## Claims

1. An antistatic adhesive for water-based dry laminates, **characterised by** the addition of an antistatic agent in a water-dispersible polyurethane resin having a carboxyl group in a side chain thereof.

2. An antistatic adhesive in accordance with claim 1, for water-dispersible dry laminates, **characterised in that** water-dispersible polyisocyanate is used as a bridging/curing agent for the water-dispersible polyurethane resin.

3. An antistatic adhesive in accordance with claim 1, **characterised in that** the antistatic agent is a mixture of quaternary ammonium salt betaine and an electrolytic metallic salt.

4. An antistatic adhesive comprising the polyurethane resin water dispersion according to claim 1 and the polyisocyanate water dispersion according to claim 2.

5. An antistatic adhesive according to claim 3, **characterised in that** the quaternary ammonium salt betaine is alkyl dimethyl aminoacetate.

6. An antistatic adhesive in accordance with claim 3, **characterised in that** the electrolytic metallic salt is a mixture of one or more selected from the group consisting of sodium chloride, magnesium chloride, potassium chloride, sodium nitrate, magnesium nitrate, potassium nitrate, and related compounds.

7. A complex plastic film laminated with an antistatic adhesive according to any one of the preceding claims 1 to 6.

8. An antistatic adhesive for solvent-based dry laminate prepared by adding an antistatic agent in solvent-based polyurethane.

9. An antistatic adhesive according to claim 8, wherein an aliphatic isocyanate based curing agent is used as the bridging/curing agent for the solvent-based polyurethane resin.

10. An antistatic adhesive according to claim 8, wherein the antistatic agent is a mixture of an aliphatic dimethylethyl ammonium ethosulphate salt and a polyoxyethylene alkyl ether.

11. An antistatic adhesive according to claim 8, wherein the adhesive comprises an organic solvent solution of polyurethane resin and the organic solvent solution of isocyanate according to claim 9.

12. A complex plastic film laminated with the antistatic according to any of the preceding claims 8 to 11.
